(19) Europäisches Patentamt
European Patent Office
Office européen des brevets

(11) EP 1 462 735 A2

(12) # DEMANDE DE BREVET EUROPEEN

(43) Date de publication:
**29.09.2004 Bulletin 2004/40**

(51) Int Cl.7: **F24J 2/04**

(21) Numéro de dépôt: **04447064.9**

(22) Date de dépôt: **15.03.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **21.03.2003 BE 200300175**

(71) Demandeurs:
- **Arbon, Etienne**
  **7700 Mouscron (BE)**
- **Arbon, Albert**
  **7522 Lamain (BE)**
- **Sockeel, Pierre**
  **8930 Rekkem (BE)**

(72) Inventeurs:
- **Arbon, Etienne**
  **7700 Mouscron (BE)**
- **Arbon, Albert**
  **7522 Lamain (BE)**
- **Sockeel, Pierre**
  **8930 Rekkem (BE)**

(54) **Eléments de construction multifonctionnels, préfabriqués pour murs extérieurs et toitures, visant à la récupération de énergies renouvelables et au remplacement des énergies fossiles**

(57) Présente une forte isolation contre le froid et la chaleur.

Récupère le maximum du rayonnement solaire direct et diffus dans n'importe quelle position.

Utilise deux fluides caloporteurs : l'air provenant de l'intérieur de l'habitation (14) pour capter le solaire direct et une saumure **(11)** à une température inférieure à 0° pour capter, avec un très haut rendement, le rayonnement diffus, l'énergie extractible de l'air extérieur et de ventilation.

La combinaison saumure plus air permet la régulation hygrométrique et évite d'atteindre le point de rosée.

Permet le refroidissement l'été.

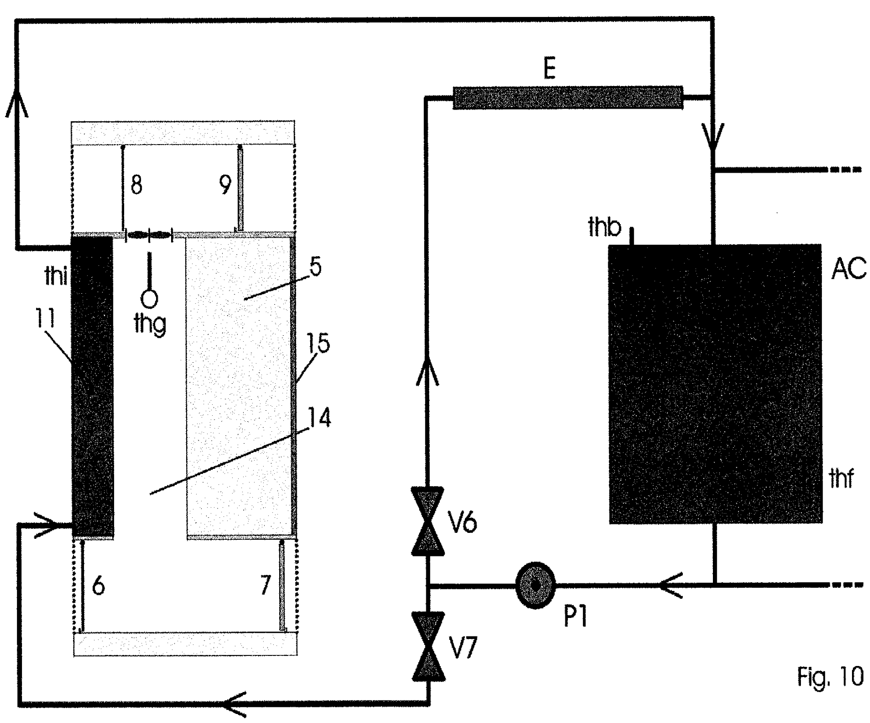

Fig. 10

EP 1 462 735 A2

## Description

Eléments de construction destinés à compléter les possibilités décrites dans le brevet du 22/02/2002 mais utilisables dans toutes autres constructions.

Dans ce brevet, la chaleur solaire est captée soit par des panneaux solaires, ou de préférence par des vitrages à basse émissivité dont le coefficient de transfert : K = 1,12 kCalories : $m^2$/h/°C.

Malgré un tel coefficient de basse émissivité, la perte de chaleur due par celle qui retraverse la fenêtre lorsqu'il n'y a plus de soleil et les jours sans soleil est encore très conséquente en comparaison des murs, sols et plafonds qui se caractérisent aujourd'hui par un très haut degré d'isolation.

Dans les nouvelles habitations, dites solaires, on rencontre le plus souvent pour l'isolation des épaisseurs supérieures à 10 cm de mousses polymères, 12 cm de laines minérales et jusque 30 et 40 cm de flocs cellulosiques. Remarquons que par exemple avec 8 à 10cm de mousse polymère, on arrive à une isolation 3 fois plus élevée que par ces vitrages.

Lorsqu'une grande surface vitrée n'est pas spécialement recherchée pour le captage solaire, ou dans des régions plus froides, on complétera l'action des fenêtres par cet élément préfabriqué parfaitement adaptable au mode de construction décrit dans le brevet précédent pour le remplacement de murs extérieurs. (voir à ce sujet l'étude de mai 2002 présentée sur le Net : www.chaper.be)

Ce nouvel élément est capable de répondre aux fonctions principales présentées dans l'abrégé et d'autres qui seront par la suite décrites.

## Description détaillée.

Il se compose **(Fig1)** de deux caissons (1) et (2) séparés par une paroi (3) et un ventilateur(4).

**Le caisson 1** comprend :

Côté gauche : Une tôle (11) enduite d'une couleur adaptée à basse émissivité et comme il est assez rare que la façade soit exposée plein Sud, on remédie à la perte de chaleur due à la réflexion en utilisant une tôle ondulée en dents de scie dans la section horizontale.

Le tableau suivant représente quelques différents angles d'incidence pour des habitations mal orientées vis à vis du Sud et la correction apportée par l'ondulation de la tôle, de sorte que le premier avantage que l'on en retire est de réduire au maximum l'hiver la réflexion des rayons solaires à midi alors qu'ils sont les plus intenses.

Sur ce tableau (**Fig.2**) :

1) Façade bien orientée au Sud, la tôle est plane.
2) et 3) Façade mal orientée vis à vis du Sud et la correction apportée.
4) et 5) Le Sud est sur le prolongement de la diagonale de la surface au sol de l'habitation :

   en 4) - la surface au sol est carrée, la surface de captage est 1,4 fois plus grande que si une face de l'habitation avait été correctement orientée plein Sud.
   en 5) - la surface au sol est rectangulaire, on aura intérêt d'exposer la façade la plus longue au Sud-Ouest.

Remarquons que nous suivons le même raisonnement pour l'ondulation dans la section verticale lorsque l'élément est posé en toiture. Le plus souvent, la tôle sera doublement ondulée et offrira une meilleure rigidité. Dans tous ces cas, pour capter le maximum de soleil à midi, l'angle $\beta$ est de 90°. Concernant l'ombrage apporté sur la façade, l'angle $\beta$ variera pour capter le maximum d'énergie.

Il devient alors possible d'appliquer sur l'enduit capteur une pellicule de résine très transparente (verre organique : acrylique, polycarbonate, téréphtalate, etc..) tout en éliminant la réflexion l'hiver et au contraire, l'accentuer l'été, vu la plus haute position du soleil dans le ciel.

Cette pellicule de quelques mm., présente également l'avantage de réduire la perte de chaleur par convection vers l'extérieur.

Dans le même ordre d'idée, on peut utiliser une tôle plane peinte pour capter la chaleur et c'est la pellicule transparente qui est ondulée (verre minéral ou organique), créant ainsi un espace isolant : dispositif plus compliqué à réaliser et pas beaucoup plus avantageux car on demande à la sortie des températures peu élevées pour le stockage dans l'accumulateur et de ce fait la perte par conduction est faible.

Côté droit de l'élément : (vers l'intérieur de l'habitation - **Fig 1**) :

Un panneau (5) constitué de mousse polymère de plus de 10 cm d'épaisseur ou de laine minérale pour son caractère anti-feu afin de procurer une isolation thermique de haute qualité.

Volets :

Sous la tôle ondulée (11) est suspendu un volet (6) pas nécessairement isolé dont le rôle est de laisser pénétrer l'air extérieur dans le caisson, de même un volet (7) le plus isolé possible est suspendu sous la paroi (5) pour laisser pénétrer l'air de l'intérieur de l'habitation dans le premier caisson.

**Le caisson 2.**

Est séparé du caisson 1 par la paroi et le ventilateur dessiné horizontalement mais pouvant être placé verticalement s'il est de trop grand diamètre afin de réduire la vitesse et par conséquent le bruit. Il est équipé également de deux volets: le (8) en communication avec l'extérieur de l'habitation et le (9) bien isolé en communication avec l'intérieur. Le plafond (10) n'est pas nécessairement isolé, de même les parois latérales (12). Pour protéger chaque volet, une grille moustiquaire combinée à une grille de protection (13).

**Fonctionnement.** Vu principalement dans l'optique Chaper

A - Récupération de la chaleur solaire (directe et diffuse )

1 - Concernant le rayonnement solaire direct : au voisinage du ventilateur et dans le caisson 1 se trouve un thermomètre contacteur actionnant le ventilateur à partir d'une température légèrement supérieure à 25° de façon que la chaleur excédentaire soit captée par les échangeurs situés au plafond (solives ou hourdis) et stockée dans l'accumulateur AC (voir la 1re étude Chaper), exactement comme la chaleur captée par les fenêtres.

Sur les **figures 3 à 7**, sont représentés uniquement les volets (6) et (7) du caisson 1 et au-dessus, les volets (8) et (9) du caisson 2.

Le rôle des volets est le suivant (**Fig 3**) : Lorsque sous l'effet de la chaleur, le thermomètre actionne le ventilateur, et sous l'effet de la dépression causée par ce ventilateur, le volet (7) s'ouvre alors que le volet (6) est verrouillé par un U soudé sur une tige pivotant autour de son axe. Dans le caisson 2, le volet (8) est verrouillé de la même manière. L'air chaud suit le trajet indiqué par la flèche (en pointillé) et sort dans l'habitation à hauteur des solives pour les alimenter en calories et en parallèle avec l'air chaud capté par les fenêtres. Remarquons que la température de la saumure arrivant à l'intérieur des solives est très basse et la chaleur fournie par l'air rapidement absorbée. Les volets (6) et (8) ainsi bloqués évitent les effets néfastes des vents extérieurs (tourbillons créant des pressions et dépressions). Il en est de même du rôle des butées évitant les oscillations des volets.

2 - Concernant les rayons solaires diffus, on conçoit de suite que selon la Fig 6, si on remplace le fluide caloporteur qui est l'air par le fluide liquide du circuit de transfert (température négative) circulant dans des canaux de section triangulaire obtenus en soudant une tôle plane par points sur la tôle ondulée, on en retire le maximum de calories pour une basse température des rayons diffus. La soudure par points est plus aisée, on ne recherche pas une parfaite étanchéité entre ces canaux.

En corollaire, selon la **Fig 4**, on peut capter de la même façon la chaleur de l'air extérieur à basse température. La combinaison alternative d'extraction par air ou saumure présente un intérêt capital pour la régulation de l'état hygrométrique.

Remarquons que lorsque la tôle captatrice est plane, c'est la tôle ajoutée qui sera ondulée afin de reconstituer ces canaux.

B - Refroidissement de l'élément. **(Fig 4)**

L'été ou en période de chauffage, lorsque le soleil est présent et que la chaleur captée ne peut plus être stockée, un thermomètre contacteur installé à l'intérieur de l'habitation intervient de sorte que la circulation de la saumure s'arrête et la chaleur captée est refoulée par ventilation à l'extérieur. Les deux tiges de commandes prennent les positions indiquées (**Fig 4**), ce qui évite d'avoir une température excessive à l'intérieur pouvant conduire à sa destruction.

C - Refroidissement de l'habitation la nuit l'été. **(Fig 5)**

Lorsque la température extérieure est inférieure à celle du circuit de chauffe, ce que l'on observe dans beaucoup de contrées, dont chez nous, durant les mois de Juin à Septembre où la température oscille la nuit entre 10 et 20° (voir les graphiques dans la première étude Chaper), il est possible d'envoyer l'air froid de l'extérieur vers l'intérieur. Ce sont les volets (7) et (8) qui sont verrouillés. On assiste, en même temps, à un refroidissement direct des convecteurs. De plus, en faisant circuler en même temps la saumure dans ces éléments, la température baisse dans l'accumulateur, lequel refroidira à son tour, le jour, l'habitation par les solives ou les hourdis.

D - Récupération de la chaleur de l'air extérieur.

Lorsque la température de l'air extérieur est supérieure à celle de la saumure, les volets (7) et (9) se verrouillent, l'air entre par le volet (6) et sort par le (8), cependant pour un meilleur rendement, on fera de préférence circuler l'air à contre-courant de celui de la saumure, l'air entrant par le volet (8) et sortant par le (6) avec le ventilateur tournant en sens inverse. Ceci n'est cependant possible que par le fonctionnement électromécanique des volets qui sera vu plus loin.

E - Récupération de la chaleur de l'air rejeté à l'extérieur. (air de ventilation)

Nous avons vu qu'avec la saumure froide comme fluide caloporteur, on pouvait récupérer la chaleur de l'air extérieur, il en est de même pour l'air de ventilation en verrouillant les volets (7) et (8). L'air entre par le volet (9) et sort par le (6) dépouillé de ces calories (n'est cependant possible que par le fonctionnement électromécanique des volets comme en D).

F - Position repos **(Fig 6)**

Une dernière position, où tous les volets sont verrouillés, correspond à la position repos lorsqu'il n'y a pas de chaleur à récupérer et assure une très bonne isolation contre le froid et le vent.

De la sorte :

Les deux tiges de commande des verrous occuperont donc quatre positions décalées de 90° autour de leurs axes.

Selon les figures 3, 4 et 5 on remarque **(Fig 7)** que pour chaque volet, la butée se trouve toujours du même coté : coté gauche pour les volets (6) et (9) et coté droit pour les volets (7) et (8) ce qui simplifie le fonctionnement (un autre type de fonctionnement mécanique).

Cette description mécanique sur le fonctionnement des volets bien que pouvant être réalisée est plus explicative que réaliste. Elle exige que le capteur soit positionné verticalement et donc pas valable en toiture. Une autre solution beaucoup plus intéressante consiste à commander les volets électromécaniquement (Fig 8)

Le volet n'est plus suspendu, mais traversé par un axe en son centre et articulé autour de cet axe. Les quatre volets peuvent être identiques.

Coupe transversale :

11 - tôle ondulée
14 - espace pour le passage de l'air
5 - paroi isolante en mousse polymère rigide.
15 - panneau de bois de protection et finition.
16 - volet avec la biellette de la tige de commande en position ouverte (17), et position fermée (18)
19 - axe du volet avec renfort.
20 - isolant : bois ou mousse rigide
21 - mousse de caoutchouc souple pour l'étanchéité.
22 - électroaimant commandant l'ouverture du volet.
23 - verrou
24 - électroaimant commandant la fermeture.
13 - grille de protection.
25 - protection contre la pluie (pour les volets extérieurs uniquement).

Le fonctionnement est le suivant :

Lorsque le volet est fermé, la biellette de la tige de commande fixée sur le volet est dans la position (18). Suite à une impulsion sur l'électroaimant (22), la tige passe en position (17), le volet est ouvert et reste ouvert calé par le ressort du verrou (23). C'est seulement lorsque l'électroaimant (24) reçoit à son tour une impulsion que le volet se referme, entraîné et maintenu fermé par le poids de l'ensemble tiges et masse mobile de l'électroaimant.
Les 4 volets fonctionnent de la même manière et il n'est pas nécessaire d'isoler les volets (6) et (8). Ils seront toutefois étanches au vent.

## Caractéristiques techniques.

- Les dimensions: hauteur et largeur sont en rapport avec la façade. Nous avons arbitrairement pris les dimensions de 3 * 2 m. pour les calculs. Les dimensions réelles restent à être déterminées. Il convient pour les façades exposées à l'Est et à l'Ouest, et les maisons dont les façades sont mal orientées vis à vis du Sud.
- Pour réduire au maximum l'émissivité, la couleur sera pigmentée de préférence avec le noir de carbone et comme sa prise d'huile est élevée, on ajoutera des pigments à haut pouvoir couvrant et haute résistance aux UV comme les oxydes de fer rouges, ou des couleurs préparées pour cet usage.
- On utilisera la tôle ondulée en fer ou galvanisée, l'inox, l'aluminium, le cuivre et l'épaisseur selon le but recherché : le prix ou la légèreté et la conductivité.
- Sur la tôle coté intérieur et dans le bas avec l'arrivée de la saumure à une température négative il se formera une zone de condensation et on y installera une gouttière.
- Avec les deux tôles soudées dont une est toujours ondulée et la pellicule plastique faisant corps avec la tôle, la résistance à la chute des grêlons sera assurée.
- Pour la solution mécanique, les volets (6) et (8) sont des volets plastiques légers et rigides articulés par une membrane très souple possédant un très haut degré de résistance au pliage et assurant l'étanchéité, ou un autre type de charnière étanche. Les volets (7) et (9) sont également des éléments légers constitués de mousse polymère enveloppée dans une gaine plastique rigide avec même charnière que les volets précédents.
- Tous ces volets sont équipés de joints évitant le passage de l'air lorsqu'ils sont fermés par verrouillage ou en butée.
- Dans le caisson 1, la distance entre la tôle et la paroi isolante est calculée pour avoir une vitesse de l'air en contact avec la tôle suffisante.
- La vitesse du ventilateur sera régulée en fonction de la température recherchée afin d'éviter les mises en route intempestives et veiller au confort dans l'habitation, aussi le thermomètre contacteur sera alors avantageusement remplacé par une CTN avec commande classique de la vitesse du ventilateur.
- Epaisseur minimum de l'ensemble : Si on utilise une tôle ondulée en dents de scie ayant une profondeur de 4 cm, un espace de 7,5 cm., une paroi isolante de 10 cm. et un panneau de protection de 1 cm. l'épaisseur totale sera : 4 + 7,5 + 10 + 1 = 22,5 cm.
- Pour des murs extérieurs plus épais, le vide sera comblé en complétant l'isolation par exemple avec un floc cellulosique (de bas prix : papiers déchiquetés, non récupérables pour la papeterie comme les revues fortement encrées, les papiers plastifiés, etc...)
- Lorsque les volets sont actionnés électromécaniquement selon la figure 8 et si l'élément est utilisé incliné, comme c'est le cas en toiture, les électroaimants (22) et (24) sont redressés le plus possible à la verticale, ou prévus pour.
- Lorsque c'est la paroi en verre (minéral ou organique) qui est ondulée à la place de la tôle, l'air passera de chaque côté de celle-ci.
- Lorsque l'élément déjà peu lourd est posé en toiture, il peut encore être allégé en supprimant la paroi (15) ou la remplaçant par une protection plus mince.
- Surtout en toiture il faudra ajouter une tôle de protection (25) contre la pluie et pour les murs extérieurs, faire pivoter la figure 8 de 180° et redresser le mécanisme.

Comme la saumure sortant de l'accumulateur est à une température très basse, on a vu qu'il devient possible d'encore capter un rayonnement diffus très faible, il faudra couper l'alimentation du ventilateur et verrouiller les volets en position repos.
Finalement dans une habitation, on aurait la combinaison des trois types d'éléments :

*Pour les murs extérieurs:*

Type 1 : Le type que l'on vient d'exposer.
Type 2 : Conformément à la première étude Chaper, pour le stockage des calories par le mur extérieur on retrouve la tôle (11) mais plane et de même teinte (même décor), pas de captage solaire, puis l'isolant (5), la cuve parallélépipédique et le reste selon la première étude.
Type 3 : Lorsque le mur est simplement isolant, la même tôle qu'en type 2, l'isolant (5) et la paroi protectrice (15).

*Pour la toiture :*

Les types 1 et 3. Le type 1 pouvant être plus léger du fait que la chaleur solaire directe captée est entraînée principalement par air. On conserve uniquement la tôle captatrice doublement ondulée, le ventilateur, les volets et pas de circuit pour la saumure. On aura le choix, tout dépendra du milieu.
Pour une habitation lorsque murs et toitures seront construits avec ces trois types d'éléments il est possible de fractionner ses constituants pour la pose :

1) Poser les cadres formés par les parois latérales de l'élément et les assembler pour constituer toute l'ossature des murs et du toit
2) Fixer dans ces cadres la tôlerie et les volets (6 et 8).
L'intérieur du bâtiment est protégé des intempéries
3) L'appareillage interne.
4) Les volets coté intérieur (7 et 9)
5) La cloison (5 + 15) laquelle peut être fixée avec charnières ou posée entre deux tôles pliées en U comme les portes de certaines armoires pour faciliter l'entretien et les réparations. De cette façon la manipulation pour la construction est plus aisée.

**Calcul du niveau global de déperdition.** (à laquelle on pourrait arriver)

Suite à la 1re étude Chaper et cette nouvelle étude concernant le remplacement des murs extérieurs, nous aurions l'habitation ci-après plus perfectionnée que celle vue dans Chaper où K était de 36.
Vitrages : la surface vitrée exposée au Sud dans la 1re étude Chaper est de 32,5 $m^2$ ; dans la nouvelle habitation, la moitié de ces vitrages est remplacée par ce nouvel élément. Nous aurions :

- Vitrages (même coefficient K de 1,3 W) (32,5*1,3) / 2 = 21,1
- L'élément étant isolé avec 10 cm. de mousse polymère : (32,5*0,20)/2 = 3,2
- Vitrages non exposés au Sud (K= 1,1) 15*1,1 = 16,5
- Surface des parois ext. occupée par les éléments types 1 et 3 de 122,5 $m^2$ : 122,5*0,20 = 24,5
- Plafond avec la même isolation équiv. à 10 cm. de mousse comme pour les murs: 240*0,20 = 48,0
- Sol : même isolation que Chaper = (240*0,48)/3 = 38,4
- Porte garage - idem Chaper 6,0 Total = 157,7

La superficie de déperdition = 170+2*240 = 650 $m^2$ kS = 157,7 / 650 = 0,25 et K = 25
Vu le plus faible coefficient de déperdition, la possibilité de pouvoir plus facilement déshydrater l'air lorsque l'habitation n'est pas occupée (pas de murs froids pour produire une condensation).
La température sous l'action du soleil atteint facilement des températures très élevées dans l'élément à faible débit d'air. Nous remarquons que selon la position des volets de la figure 4 il serait possible de reconcentrer par évaporation une solution aqueuse d'un sel déliquescent (par ex. $CaCl^2$) en faisant couler la solution en «rideau» dans une membrane poreuse à l'intérieur de l'élément, et recueillir la solution reconcentrée dans une petite cuve. Par la suite, si dans l'habitation, un certain état hygrométrique est dépassé, les volets passent selon la position de la figure 3, et la solution est pompée dans le haut de la membrane poreuse pour descendre lentement dans celle-ci en absorbant la vapeur d'eau, le reste de l'installation étant à l'arrêt. Il suffit de quelques éléments équipés de cette manière pour arriver à ce résultat. Cette reconcentration se produira automatiquement lorsque la densité de la solution sera trop faible.

**Application Calculs sur la base Chaper.**

Pour les calculs ci-après, nous poursuivons l'étude sur la base de l'habitation pilote vue à la 1re étude Chaper (figure 8) afin de comparer les résultats.

Si nous remplaçons les murs extérieurs et la toiture par les éléments types 1 et 3, tout en conservant les mêmes surfaces vitrées, nous aurions avec des éléments de 2 m. de large et 3 m. de haut des surfaces occupées :

1) Coté Sud: par une façade de 24m * 3m comprenant des fenêtres à basse émissivité d'une surface totale effective de 32,5 $m^2$ et des éléments de type 1 avec une surface utile de 27 $m^2$. Une surface totale de 27+32.5 = 59,5 $m^2$ pour capter la chaleur solaire directe et diffuse et les 27 $m^2$ pour retirer en plus la chaleur de l'air.
2) Coté Ouest : Murs en éléments type 1 = 25 $m^2$.
3) Coté Nord : Fenêtres à très basse émissivité ( K = 0,95) : 8$m^2$.
Murs en éléments type 3 = 47 $m^2$.
4) Coté Est : Fenêtres ( K = 0,95) = 7 $m^2$.
Murs type 1 = 18 $m^2$.
5) Toiture :de 12 * 24 $m^2$ recouverte d'éléments type 3.

***Chaleur captée***

A - Chaleur solaire directe et diffuse.

-- *provenant du rayonnement direct:*

Elle est captée par les vitrages exposés au Sud ayant même coefficient K que dans la 1re étude (sur la base d'un rendement solaire de 70% ) et par les éléments de type 1, ayant même rendement que les vitrages. Nous supposons que le rendement solaire est identique, car le procédé Solarwall utilisé avec succès au Canada possède un rendement solaire de 72%. Ce procédé consiste à capter directement la chaleur solaire par une tôle peinte exposée aux intempéries et percée de 10.000 trous de 2mm de diamètre par $m^2$ à travers lesquels est aspiré l'air extérieur servant d'air de ventilation préchauffé.

| | | |
|---|---|---|
| Octobre | 3412 * 59,5 = | 203014 kCal par jour de soleil. |
| Novembre | 2590 * 59,5 = | 154105 |
| Décembre | 1960 * 59,5 = | 116620 |
| Janvier | 2137 * 59,5 = | 127151 |
| Février | 2625 * 59,5 = | 156187 |
| Mars | 3192 * 59,5 = | 189924 |
| Avril | 3670 * 59,5 = | 218365 |
| Mai | 3990 * 59,5 = | 237405 |

-- *provenant du rayonnement diffus :*

Elle est absorbée par les vitrages et les éléments type 1 exposés au Sud, à l'Est et l'Ouest mais comme dans la 1re étude, difficile à chiffrer, est négligée.

B - Chaleur de l'air extérieur.

Elle est captée par les murs pourvus d'éléments type 1 dont la surface totale (voir 1re étude ) est de 27 + 25 + 18 = 70 $m^2$, mais la combinaison des vitrages et des éléments peut faire perdre jusque 30% de la surface utile, il resterait au moins : 70 * 0,7 = 50 $m^2$.

Remarquons que pour des régions plus froides que la nôtre, des zones ombragées, le captage peut porter également sur les pignons et en toiture.

Comme la surface utile d'un élément est de 5 $m^2$ il faut donc 10 éléments. (nous prenons ces dimensions pour les calculs, mais on peut prendre des dimensions plus faibles selon le poids envisagé pour faciliter la construction et la solidité de l'ossature).

***Circuit pour la saumure***

La saumure circule dans des canaux dont la section est triangulaire. Pour une hauteur de 4 cm. de l'ondulation en dents de scie sur une largeur de 2 m., la section totale de passage est : 0,5*(2*0,04) = 0,04 $m^2$. Le volume liquide occupé par élément est donc de 0,04 * 2,5 = 0,1 $m^3$. La capacité de AC (voir première étude ) est de 5 $m^3$. Pour réduire la durée de passage, la chaleur de l'air est captée sur une durée de 8 heures: 5 avant 16 heures et 3 après. (maximum de chaleur pouvant être captée sur cette durée). Le débit de la pompe P2 sera 5000 / 8 = 625 litres /heure, et par élément 625 /10 = 62,51/h. Pour parcourir un élément la durée de passage sera de 100/62,5 = 1 heure 36 minutes. Avec une telle durée, on conçoit que la température de la saumure à la sortie de l'élément sera très voisine de celle de l'air extérieur et on tablera sur une différence de 1°.

La régulation du débit de la saumure dans quelques éléments de type 1 permet selon la position des volets (circuit de la figure 3) de déshydrater l'air quand l'état hygrométrique est dépassé. Ces éléments sont alors pourvus d'un collecteur d'eau. Il ne serait donc plus nécessaire de faire appel a la solive dessinée dans la première étude avec tube de répartition dans le bas et collecteur d'eau, mais avec tube central perforé comme dessiné en haut de cette même page, ce qui permet un échange progressif à l'intérieur de la solive, et évite la condensation en surface.

***Circuit de l'air***

Pour le passage de l'air, on utilise la largeur minimum qui a été calculée, égale à 7 cm .La section de passage = 2 * 0,07 = 0,14 $m^2$.

***Chaleur captée en fonction de la température extérieure***

Afin d'éviter le bruit résultant de la ventilation, la vitesse de l'air est choisie entre 0,5 et 1 m/seconde. A la vitesse de 0,5m/s., le volume débité est de 0,5 * 0,14 = 0,07m3/s ou 0,07 * 3600 = 252 $m^3$ / heure. Si la température de l'air extérieur est t°, la température à la sortie de l'élément sera t°-1.

-- Capacité calorifigue de l'air.

L'air sera capable de fournir à la saumure une quantité de chaleur Q1 égale à 252*1,29*0,24 (t°-1)= 78 (t°-1) kCal/h.

Si on prend, par exemple, la température extérieure de 7° : Q1 = 78*(7-1) = 468 kCal./h. et par élément. Reste à voir la capacité d'échange par la tôle ondulée et la capacité de captage par la saumure.

- Capacité d'échange entre la tôle et l'air.

Le coefficient de transmission K entre fer et air = 2 + 10 √v , pour √v = 0,5 m/s., K = 9.

La différence de température sera comprise entre -3° et t°-1 et égale à t°+2,

pour la température extérieure de 7 : Q2 = 9 * 5 *(7+2) = 405 kCal.

-- Capacité de captage pour la saumure.

Q3 = 62,5 * 9 = 562,5 kCal. C'est cette dernière valeur que l'on prendra, et comme Q1 et Q2 sont inférieurs, le débit de l'air sera très légèrement augmenté pour satisfaire ces valeurs.

***Calories récupérées en fonction de la température extérieure.***

Le graphique (**Fig9**) semblable à celui vu dans la 1re étude (figure 13), permet de calculer les températures t°4 et t°5, de là, la température moyenne t°m1 durant les 5 heures qui précèdent 16 heures et de même manière t°m2 durant les 3 heures qui suivent.

Avant 16 heures

Comme la saumure arrive dans l'élément à la température de -3°, on peut capter la chaleur de l'air à très basse température pour la stocker dans AC. Dans ces conditions les calories absorbées en fonction de la température extérieure seront :

Pour une t° extérieure moyenne t°m1, un débit de 62,51/h. durant 5 heures et pour 10 éléments: Q = (t°m1+2) * 62,5 * 5 * 10 ou 3125 (t°m1+2).

Le tableau A indique les valeurs de t°m1 en fonction des températures extérieures t°1 et t°2. Le second tableau B, les calories récoltées en fonction de ces températures.

Le calcul de t°m1 est le suivant :

On peut écrire (t°2 - t°1) /9 = (t°4 - t°1) / 4, en retire t°4, puis la moyenne entre t°4 et t°2 c-à-d t°m1 = 0,28 t°1 + 0,72 t°2 et pour simplifier les calculs : t°m1 = 0,3t°1+ 0,7 t°2

Après 16 heures

Calcul de t°m2 : De la relation (t°2 - t°5) / 3 = (t°2 - t°3) / 15, on en retire : t°5 = 0,8 t°2 + 0,2 t°3 puis t°m2 = 0,9t°2 + 0,1t°3 ; voir le tableau C.

La quantité de calories retirées par les 10 éléments entre 16 h. et 19 h. est

Q = (t°m2 +2) * 62,5 * 3 * 10 = 1875 (t°m2+2) ; voir le tableau D.

Chaleur retirée de l'air la nuit :

Elle a été calculée dans la 1re étude et s'applique ici, puisque c'est le même échangeur que dans cette étude.

Le circuit des éléments type 1 est alimenté par la pompe P1 du circuit de transfert et est soit en parallèle (**voir Fig10)** ou en série-parallèle avec le circuit des solives ouy des hourdis. Il vient s'ajouter au dessin de la figure 15 de la 1re étude Chaper.

Tableau A

| Relevé de t°m1 en fonction de t°1 et t°2 | | | | | | | | | | | | | |
|---|---|---|---|---|---|---|---|---|---|---|---|---|---|
| | t°1 | | | | | | | | | | | | |
| | 1 | 2 | 3 | 4 | 5 | 6 | 7 | 8 | 9 | 10 | 11 | 12 | 13 |
| t°2 | | | | | | | | | | | | | |
| 1 | 1 | 1,3 | 1,6 | 1,9 | 2,2 | 2,5 | 2,8 | 3,1 | 3,4 | 3,7 | 4 | 4,3 | 4,6 |
| 2 | 1,7 | 2 | 2,3 | 2,6 | 2,9 | 3,2 | 3,5 | 3,8 | 4,1 | 4,4 | 4,7 | 5 | 5,3 |
| 3 | 2,4 | 2,7 | 3 | 3,3 | 3,6 | 3,9 | 4,2 | 4,5 | 4,8 | 5,1 | 5,4 | 5,7 | 6 |
| 4 | 3,1 | 3,4 | 3,7 | 4 | 4,3 | 4,6 | 4,9 | 5,2 | 5,5 | 5,8 | 6,1 | 6,4 | 6,7 |
| 5 | 3,8 | 4,1 | 4,4 | 4,7 | 5 | 5,3 | 5,3 | 5,9 | 6,2 | 6,5 | 6,8 | 7,1 | 7,4 |
| 6 | 4,5 | 4,8 | 5,1 | 5,4 | 5,7 | 6 | 6,3 | 6,6 | 6,9 | 7,2 | 7,5 | 7,8 | 8,1 |
| 7 | 5,2 | 5,5 | 5,8 | 6,1 | 6,4 | 6,7 | 7 | 7,3 | 7,6 | 7,9 | 8,2 | 8,5 | 8,8 |
| 8 | 5,9 | 6,2 | 6,5 | 6,8 | 7,1 | 7,4 | 7,7 | 8 | 8,3 | 8,6 | 8,9 | 9,2 | 9,5 |
| 9 | 6,6 | 6,9 | 7,2 | 7,5 | 7,8 | 8,1 | 8,4 | 8,7 | 9 | 9,3 | 9,6 | 9,9 | 10,2 |
| 10 | 7,3 | 7,6 | 7,9 | 8,2 | 8,5 | 8,8 | 9,1 | 9,4 | 9,7 | 10 | 10,3 | 10,6 | 10,9 |
| 11 | 8 | 8,3 | 8,6 | 8,9 | 9,2 | 9,5 | 9,8 | 10,1 | 10,4 | 10,7 | 11 | 11,3 | 11,6 |
| 12 | 8,7 | 9 | 9,3 | 9,6 | 9,9 | 10,2 | 10,5 | 10,8 | 11,1 | 11,4 | 11,7 | 12 | 12,3 |
| 13 | 9,4 | 9,7 | 10 | 10,3 | 10,6 | 10,9 | 11,2 | 11,5 | 11,8 | 12,1 | 12,4 | 12,7 | 13 |
| 14 | 10,1 | 10,4 | 10,7 | 11 | 11,3 | 11,6 | 11,9 | 12,2 | 12,5 | 12,8 | 13,1 | 13,4 | 13,7 |
| 15 | 10,8 | 11,1 | 11,4 | 11,7 | 12 | 12,3 | 12,6 | 12,9 | 13,2 | 13,5 | 13,8 | 14,1 | 14,4 |

Tableau B

| Calories fournies en 5 heures de 11 à 16 heures pour les 10 éléments de type 1 | | | | | | | | | | | | | |
|---|---|---|---|---|---|---|---|---|---|---|---|---|---|
| | t°1 | | | | | | | | | | | | |
| | 0 | 1 | 2 | 3 | 4 | 5 | 6 | 7 | 8 | 9 | 10 | 11 | 12 |
| t°2 | | | | | | | | | | | | | |
| 1 | 8438 | 9375 | 10312 | 11249 | 12187 | 13124 | 14062 | 15000 | 15937 | 16874 | 17812 | 18784 | 19687 |
| 2 | 10625 | 11562 | 12491 | 13437 | 14375 | 15312 | 16250 | 17187 | 18124 | 19061 | 20000 | 20937 | 21874 |
| 3 | 12812 | 13750 | 14687 | 15625 | 16652 | 17500 | 18437 | 19374 | 20311 | 21250 | 22185 | 23124 | 24062 |
| 4 | 14999 | 15937 | 16875 | 17813 | 18750 | 19687 | 20625 | 21562 | 22500 | 23438 | 24376 | 25314 | 26250 |
| 5 | 17188 | 18125 | 19063 | 20000 | 20939 | 21875 | 22813 | 23751 | 24687 | 25625 | 26563 | 27500 | 28438 |
| 6 | 19375 | 20312 | 21250 | 22188 | 23125 | 24063 | 25000 | 25937 | 26875 | 27812 | 28750 | 29688 | 30625 |
| 7 | 21563 | 22500 | 23437 | 24375 | 25312 | 26250 | 27187 | 28125 | 29062 | 30000 | 30937 | 31875 | 32813 |
| 8 | 23750 | 24687 | 25624 | 26562 | 27500 | 28437 | 29374 | 30312 | 31250 | 32187 | 33124 | 34062 | 35000 |
| 9 | 25938 | 26875 | 27812 | 28750 | 29687 | 30625 | 31562 | 32500 | 33437 | 34375 | 35316 | 36250 | 37187 |
| 10 | 28125 | 29062 | 30000 | 30937 | 31874 | 32812 | 33749 | 34686 | 35624 | 36561 | 37500 | 38435 | 39372 |
| 11 | 30312 | 31250 | 32187 | 33125 | 34062 | 35000 | 35937 | 36875 | 37813 | 38751 | 39688 | 40625 | 41563 |
| 12 | 32500 | 33437 | 34374 | 35312 | 36250 | 37187 | 38124 | 39062 | 40000 | 40937 | 41875 | 42812 | 43750 |
| 13 | 34688 | 35625 | 35562 | 37500 | 38438 | 39375 | 40312 | 41250 | 42188 | 43126 | 44062 | 44999 | 45936 |
| 14 | 36875 | 37812 | 38749 | 39687 | 40624 | 41562 | 42499 | 43437 | 44375 | 45312 | 46249 | 47187 | 48125 |
| 15 | 39063 | 40000 | 40937 | 41875 | 42811 | 43749 | 44687 | 45624 | 46561 | 47499 | 48436 | 49374 | 50313 |

Tableau C

| Calcul de t°m2 en fonction de t°2 et t°3 | | | | | | | | | | | | |
|---|---|---|---|---|---|---|---|---|---|---|---|---|
| | t°2 | | | | | | | | | | | |
| | 1 | 2 | 3 | 4 | 5 | 6 | 7 | 8 | 9 | 10 | 11 | 12 |
| t°3 | | | | | | | | | | | | |
| 1 | 1 | 1,9 | 2,8 | 3,7 | 4,6 | 5,5 | 6,4 | 7,3 | 8,2 | 9,1 | 10 | 10,9 |
| 2 | 1,1 | 2 | 2,9 | 3,8 | 4,7 | 5,6 | 6,5 | 7,4 | 8,3 | 9,2 | 10,1 | 11 |
| 3 | 1,2 | 2,1 | 3 | 3,9 | 4,8 | 5,7 | 6,6 | 7,5 | 8,4 | 9,3 | 10,2 | 11,1 |
| 4 | 1,3 | 2,2 | 3,1 | 4 | 4,9 | 5,8 | 6,7 | 7,6 | 8,5 | 9,4 | 10,3 | 11,2 |
| 5 | 1,4 | 2,3 | 3,2 | 4,1 | 5 | 5,9 | 6,8 | 7,7 | 8,6 | 9,5 | 10,4 | 11,3 |
| 6 | 1,5 | 2,4 | 3,3 | 4,2 | 5,1 | 6 | 6,9 | 7,8 | 8,7 | 9,6 | 10,5 | 11,4 |
| 7 | 1,6 | 2,5 | 3,4 | 4,3 | 5,2 | 6,1 | 7 | 7,9 | 8,8 | 9,7 | 10,6 | 11,5 |
| 8 | 1,7 | 2,6 | 3,5 | 4,4 | 5,3 | 6,2 | 7,1 | 8 | 8,9 | 9,8 | 10,7 | 11,6 |
| 9 | 1,8 | 2,7 | 3,6 | 4,5 | 5,4 | 6,3 | 7,2 | 8,1 | 9 | 9,9 | 10,8 | 11,7 |
| 10 | 1,9 | 2,8 | 3,7 | 4,6 | 5,5 | 6,4 | 7,3 | 8,2 | 9,1 | 10 | 10,9 | 11,8 |
| 11 | 2 | 2,9 | 3,8 | 4,7 | 5,6 | 6,5 | 7,4 | 8,3 | 9,2 | 10,1 | 11 | 11,9 |
| 12 | 2,1 | 3 | 3,9 | 4,8 | 5,7 | 6,6 | 7,5 | 8,4 | 9,3 | 10,2 | 11,1 | 12 |
| 13 | 2,2 | 3,1 | 4 | 4,9 | 5,8 | 6,7 | 7,6 | 8,5 | 9,4 | 10,3 | 11,2 | 12,1 |
| 14 | 2,3 | 3,2 | 4,1 | 5 | 5,9 | 6,8 | 7,7 | 8,6 | 9,5 | 10,4 | 11,3 | 12,2 |
| 15 | 2,4 | 3,3 | 4,2 | 5,1 | 6 | 6,9 | 7,8 | 8,7 | 9,6 | 10,5 | 11,4 | 12,3 |

Tableau D

| Calories fournies en 3 heures de 16 à 19 heures pour les 10 éléments de type 1 | | | | | | | | | | | | | |
|---|---|---|---|---|---|---|---|---|---|---|---|---|---|
| | t°2 | | | | | | | | | | | | |
| | 1 | 2 | 3 | 4 | 5 | 6 | 7 | 8 | 9 | 10 | 11 | 12 | 13 |
| t°3 | | | | | | | | | | | | | |
| - 1 | | | | | | 13688 | | | 18450 | | | | |
| 0 | 5438 | 7125 | 8813 | 10500 | 12187 | 13875 | 15563 | 17249 | 18937 | 20625 | 22311 | 23999 | 25687 |
| 1 | 5625 | 7312 | 9000 | 10687 | 12375 | 14062 | 15750 | 17437 | 19125 | 20812 | 22500 | 24187 | 25874 |
| 2 | 5812 | 7500 | 9187 | 10875 | 12562 | 14249 | 15937 | 17624 | 19312 | 21000 | 22687 | 24374 | 26061 |
| 3 | 6000 | 7687 | 9375 | 11062 | 12750 | 14437 | 16125 | 17812 | 19500 | 21187 | 22875 | 24562 | 26249 |
| 4 | 6188 | 7875 | 9562 | 11250 | 12937 | 14624 | 16312 | 18000 | 19687 | 21375 | 23062 | 24750 | 26437 |
| 5 | 6375 | 8062 | 9750 | 11437 | 13125 | 14812 | 16500 | 18187 | 19874 | 21561 | 23248 | 24937 | 26623 |
| 6 | 6562 | 8250 | 9937 | 11624 | 13312 | 15000 | 16687 | 18375 | 20062 | 21749 | 23436 | 25124 | 26811 |
| 7 | 6750 | 8438 | 10125 | 11872 | 13500 | 15187 | 16875 | 18562 | 20250 | 21937 | 23624 | 25312 | 26999 |
| 8 | 6987 | 8624 | 10313 | 12000 | 13687 | 15375 | 17062 | 18750 | 20439 | 22194 | 23811 | 25499 | 27185 |
| 9 | 7125 | 8813 | 10500 | 12187 | 13874 | 15562 | 17250 | 18938 | 20625 | 22312 | 23998 | 25686 | 27373 |
| 10 | 7312 | 9000 | 10687 | 12374 | 14062 | 15749 | 17437 | 19125 | 20812 | 22500 | 24186 | 25873 | 27560 |
| 11 | 7500 | 9188 | 10875 | 12562 | 13250 | 15937 | 17625 | 19313 | 21000 | 22687 | 24374 | 26061 | 27748 |
| 12 | 7688 | 9375 | 11062 | 12749 | 14438 | 16125 | 17812 | 19500 | 21187 | 22875 | 24562 | 26250 | 27936 |
| 13 | 7875 | 9562 | 11249 | 12936 | 14625 | 16312 | 17999 | 19687 | 21374 | 23062 | 24749 | 26437 | 28124 |
| 14 | 8063 | 9750 | 11437 | 13124 | 14813 | 16500 | 18187 | 19875 | 21562 | 23250 | 24937 | 26625 | 28311 |
| 15 | 8250 | 9937 | 11624 | 13312 | 15000 | 16687 | 18375 | 20063 | 21750 | 23437 | 24125 | 26813 | 28501 |

***Pertes de chaleur par l'habitation***

Pertes par les éléments dans cette habitation copiée sur celle décrite dans la première étude.

Tous les murs extérieurs sont donc remplacés par ces éléments de type 1 ou 3 pour une hauteur de 3 m. et la toiture isolée avec les éléments de type 3. Ces éléments, de type 1 ou 2 ou 3, possèdent la même isolation caractérisée par le panneau en mousse polymère de 10 cm d'épaisseur collé sur le panneau de protection en bois de 1 cm. La valeur K de l'ensemble = 0,17.

| | | |
|---|---|---|
| Pertes par les fenêtres | exposées au Sud | K = 1,12 |
| | non exposées au Sud | K = 0,90 |

Chaleur perdue par les vitrages et éléments exposés au Sud :

| | | |
|---|---|---|
| Vitrages | 32,5 * 1,12 = | 36,4 |
| Eléments (murs) | 27 * 0,17 = | 4,6 |
| Toiture | 24 * 6 * 0,17 = | 24,5 |
| Sol | idem prem. étude = | 19,2 |
| Porte garage | idem | 1,2 |
| Aération | idem | 18 |
| | total : | 104 kCal./heure et par degré. |

Chaleur perdue par le reste de l'habitation :

| | | |
|---|---|---|
| Vitrages | (8+13) * 0,9 = | 18,9 |
| Murs (éléments) | {(25 + 47 + 18)3 /2,5}0,17 = | 18,4 |
| Toiture | = | 24,5 |
| Sol | = | 19,2 |
| Aération | = | 18 |
| | total : | 99 |

La perte totale par le bâtiment : 104 + 99 = 203 kCal/heure /°C Et en 24 heures : 4872 kCal. P=4872 Δt, p1 = 104 t Δt°, et p2 = (4872-104 t) Δt°

Exemple de calcul pour l'année 91-92

(voir à titre comparatif la première étude 1-A-Bilan de la chaleur solaire et le graphique A, figure 19)

Dans ces nouveaux tableaux, nous indiquons :

les températures: t°1, t°2 et t°3 laquelle est la température t°1 le lendemain matin.

| | |
|---|---|
| P | la perte totale |
| p1 | la perte dans les pièces ensoleillées durant la présence solaire. |
| F | égal à 1,3 (ES-p1). |
| A St. | quantité à stocker : F - P + p1 |
| Air Jour 5 h | chaleur captée par les éléments entre 11 h et 16 h. |
| Air J 3h. | « « 16 h et 19 h. |
| Air J total*1,3 | chaleur captée sur les 8 heures et transférée par la PAC. |
| Air nuit | chaleur fournie par l'échangeur |
| Air nuit*1,3 | cette même chaleur transférée par la PAC |

Les calculs effectués sur les mois de novembre, décembre et Janvier nous montrent que ces éléments de construction apportent suffisamment de calories, il n'y a plus de RAF (reste à fournir) dans l'habitation pilote. On peut même réduire la température de coupure de la PAC et ainsi améliorer son COP.

On peut également à tout moment transformer des éléments de type 1 en type 3 moins coûteux et plus légers du fait que tous les constituants de ces trois types d'éléments sont interchangeables. Durant le changement de type, seul le cadre reste puisqu'il fait partie de l'ossature de l'ensemble murs et toit, le reste étant facilement démonté et remplacé.

On tiendra compte de ce remplacement possible lors du renforcement de l'ossature par soit, les entraits, crémona, ou tout simplement par les solives ou les hourdis si à l'intérieur les cuves des convecteurs sont déjà posées, mais de préférence ces cuves seront posées après la construction de l'ossature lorsque l'intérieur sera à l'abri des intempéries comme il a été expliqué.

Du fait de cette ossature en fer, on pourrait craindre la formation de ponts thermiques, mais cela ne se produira pas car la paroi isolante et les volets (7) et (9) isolent le tout vis à vis de l'intérieur.

| Novembre 91 | | | | | | | | | | | | | | | | | |
|---|---|---|---|---|---|---|---|---|---|---|---|---|---|---|---|---|---|
| D | t°1 | t°2 | t°3 | S | Δt° | P | p1 | F | A St, | Air J 5 H, | Air J 3 H, | Air J Tot, *1,3 | Air Nuit | Air Nuit *1,3 | Total Air | RAF | Stock |
| 1 | 8 | 14 | 7 | | 9 | 43848 | | | | 44375 | 28687 | 94980 | 136000 | 180000 | 180000 | | 750000<br>" |
| 2 | 7 | 12 | 9 | | 10 | 48720 | | | | 39062 | 25686 | 84172 | " | " | " | | " |
| 3 | 9 | 10 | 5 | | 11 | 53592 | | | | 36561 | 20812 | 74585 | " | " | " | | " |
| 4 | 5 | 8 | 7 | | 14 | 68208 | | | | 28437 | 18562 | 61098 | " | " | " | | " |
| 5 | 7 | 10 | 0 | | 11 | 53592 | | | | 34686 | 20625 | 71904 | " | " | " | | " |
| 6 | 0 | 12 | 6 | | 14 | 68208 | | | | 32500 | 25124 | 74911 | " | " | " | | " |
| 7 | 6 | 10 | 10 | | 12 | 58464 | | | | 33749 | 22500 | 73123 | " | " | " | | " |
| 8 | 10 | 12 | 4 | * | 9 | 43848 | 8424 | 189386 | 153961 | 35624 | 24750 | 78486 | 79620 | 103506 | | | |
| 9 | 4 | 11 | 0 | | 13 | 63336 | | | | 34062 | 22311 | 73284 | 33900 | 44070 | 117354 | | " |
| 10 | 0 | 9 | 3 | | 16 | 77952 | | | | 25938 | 19500 | 59069 | 38660 | 50258 | 109327 | | " |
| 11 | 3 | 6 | 6 | | 15 | 73080 | | | | 22188 | 15000 | 48344 | 97870 | 127231 | 175575 | | " |
| 12 | 6 | 8 | 4 | | 13 | 63336 | | | | 29374 | 18000 | 61586 | 58520 | 76076 | 137662 | | " |
| 13 | 4 | 9 | 1 | | 14 | 68208 | | | | 29687 | 19125 | 63455 | 19855 | 25811 | 89256 | | " |
| 14 | 1 | 10 | 3 | | 15 | 73080 | | | | 29062 | 21187 | 65324 | 48590 | 63167 | 128491 | | " |
| 15 | 3 | 12 | 1 | * | 13 | 63336 | 12168 | 184518 | 133350 | 35312 | 24187 | 77349 | 38420 | 49946 | 127295 | | " |
| 16 | 1 | 10 | 4 | | 15 | 73080 | | | | 29062 | 21375 | 65568 | 76560 | 99528 | 165096 | | " |
| 17 | 4 | 8 | 6 | * | 14 | 68208 | 13104 | 183301 | 128197 | 27500 | 18375 | 59637 | 110250 | 143325 | 180000 | | " |
| 18 | 6 | 10 | 7 | | 12 | 58464 | | | | 33749 | 21937 | 72392 | 130500 | 169500 | " | | " |
| 19 | 7 | 10 | 5 | | 11 | 53592 | | | | 34686 | 21561 | 73121 | 110295 | 143325 | " | | " |
| 20 | 5 | 10 | 2 | | 13 | 63336 | | | | 32812 | 21000 | 69955 | 33050 | 42965 | 112920 | | " |
| 21 | 2 | 4 | 1 | | 17 | 82824 | | | | 16875 | 10413 | 35474 | 0 | 0 | 35474 | | 702650 |
| 22 | -1 | 3 | 0 | | 18 | 87696 | | | | 0 | 8813 | 11456 | 0 | 0 | 11456 | | 626410 |
| 23 | 0 | 2 | -2 | * | 19 | 92568 | 17784 | 177217 | 102433 | 10625 | 0 | 13812 | 0 | 0 | 13812 | | 749075 |
| 24 | -2 | 7 | 0 | | 18 | 87696 | | | | 0 | 15563 | 20232 | 0 | 0 | 20232 | | 681611 |
| 25 | 0 | 6 | 4 | | 17 | 82824 | | | | 19375 | 14624 | 44199 | 41800 | 54340 | 68539 | | 667326 |
| 26 | 4 | 7 | 0 | * | 14 | 68208 | 13104 | 183301 | 128197 | 25312 | 15563 | 53137 | 0 | 0 | 53137 | | 750000 |
| 27 | 0 | 10 | 1 | | 15 | 73080 | | | | 25312 | 20812 | 59961 | 26120 | 33956 | 93917 | | " |
| 28 | 1 | 5 | 0 | * | 17 | 82824 | 15912 | 179650 | 112738 | 28125 | 20812 | 63618 | 0 | 0 | 63618 | | " |
| 29 | 0 | 6 | 2 | | 17 | " | | | | 19375 | 14249 | 43711 | 0 | 0 | 43711 | | 710887 |

(suite)

| Novembre 91 | | | | | | | | | | | | | | | | | |
|---|---|---|---|---|---|---|---|---|---|---|---|---|---|---|---|---|---|
| D | t°1 | t°2 | t°3 | S | Δt° | P | p1 | F | A St, | Air J 5 H, | Air J 3 H, | Air J Tot, *1,3 | Air Nuit | Air Nuit *1,3 | Total Air | RAF | Stock |
| 30 | 2 | 4 | 0 | | 17 | " | | | | 16875 | 10500 | 35587 | 0 | 0 | 35587 | | 663650 |

Décembre 91

| D | t°1 | t°2 | t°3 | S | Δt° | P | p1 | F | A St, | Air 5 H, | Air 3 H, | Air Tot, *1,3 | Air Nuit | Air Nuit *1,3 | Total Air | RAF | Stock |
|---|---|---|---|---|---|---|---|---|---|---|---|---|---|---|---|---|---|
| | | | | | | | | | | | | | | | | | 663650 |
| 1 | 1 | 0 | 3 | 1 | 19 | 92568 | | | | 12812 | 9000 | 28355 | 0 | | 28355 | | 599437 |
| 2 | 2 | 1 | 4 | 2 | 17 | 82824 | | | | 15937 | 10875 | 34856 | 0 | | 34856 | | 551469 |
| 3 | 2 | 5 | 3 | | 16 | 77952 | | | | 19063 | 12750 | 41357 | 0 | | 41357 | | 514874 |
| 4 | 3 | 4 | 2 | * | 16 | " | 13312 | 134300 | 69660 | 17813 | 10875 | 37294 | 0 | | 37294 | | 621828 |
| 5 | 4 | 6 | -4 | | 16 | " | | | | 21250 | 0 | 27625 | 0 | | 27625 | | 571500 |
| 6 | -4 | 8 | -3 | * | 14 | 68208 | 11648 | 136464 | 79904 | 0 | 0 | 0 | 0 | | 0 | | 651405 |
| 7 | -3 | 6 | 0 | | 19 | 92568 | | | | 0 | 13875 | 18037 | 0 | | 18037 | | 376874 |
| 8 | 0 | 2 | 2 | | 19 | " | | | | 10625 | 7500 | 23562 | 0 | | 23562 | | 507868 |
| 9 | 2 | 3 | -4 | * | 19 | " | 15808 | 131055 | 54296 | 14687 | 0 | 19093 | 0 | | 19093 | | 581259 |
| 10 | -4 | -1 | -6 | * | 22 | 107184 | 18304 | 127811 | 38931 | 0 | 0 | 0 | 0 | | 0 | | 620188 |
| 11 | -6 | 1 | -7 | | 22 | " | | | | 0 | 0 | 0 | 0 | | 0 | | 513004 |
| 12 | -7 | -2 | -4 | | 24 | 116928 | | | | 0 | 0 | 0 | 0 | | 0 | | 396076 |
| 13 | -4 | 0 | -6 | * | 22 | 107184 | 18304 | 127811 | 38931 | 0 | 0 | 0 | 0 | | 0 | | 435000 |
| 14 | -5 | 1 | 2 | * | 23 | 112056 | 19136 | 126729 | 33809 | 0 | 5812 | 7555 | 0 | | 7555 | | 476361 |
| 15 | 2 | 2 | 5 | * | 19 | 92568 | 15808 | 131055 | 54296 | 12499 | 8062 | 26729 | 0 | | 26729 | | 557396 |
| 16 | 5 | 6 | 4 | | 14 | 68208 | | | | 24063 | 16624 | 52893 | 14400 | 18720 | 71613 | 560801 | |
| 17 | 4 | 8 | 6 | | 14 | " | | | | 27500 | 18375 | 59637 | 110250 | 143325 | 180000 | 680797 | |
| 18 | 6 | 10 | 6 | | 14 | " | | | | 33749 | 21749 | 72147 | 118800 | 155440 | " | 672593 | |
| 19 | 6 | 11 | 1 | | 12 | 58464 | | | | 35937 | 22500 | 75968 | 33900 | 44070 | 120038 | 734167 | |
| 20 | 1 | 7 | 9 | | 16 | 77952 | | | | 22500 | 17250 | 51675 | 136000 | 180000 | 180000 | 750000 | |
| 21 | 9 | 11 | 13 | | 10 | 48720 | | | | 38751 | 24749 | 82550 | " | " | " | " | |
| 22 | 13 | 14 | 11 | | 7 | 34104 | | | | 49000 | 29436 | 101967 | " | " | " | " | |
| 23 | 11 | 12 | 4 | | 9 | 43848 | | | | 42812 | 24750 | 87831 | 79620 | 103506 | " | " | |
| 24 | 4 | 6 | 5 | * | 15 | 73080 | 12480 | 135382 | 74782 | 23125 | 14812 | 49313 | 94050 | 122265 | " | " | |
| 25 | 5 | 9 | 7 | * | 13 | 63336 | 10816 | 137545 | 85025 | 30625 | 20250 | 66137 | 125000 | 163540 | " | " | |
| 26 | 7 | 8 | 5 | | 12 | 58464 | | | | 30312 | 18187 | 63048 | 101700 | 132210 | " | " | |
| 27 | 5 | 8 | 7 | | 14 | 68208 | | | | 28437 | 18562 | 61098 | 121075 | 157300 | " | " | |
| 28 | 7 | 9 | 8 | | 12 | 58464 | | | | 32500 | 20437 | 68818 | 136000 | 180000 | " | " | |
| 29 | 8 | 12 | 4 | | 11 | 53592 | | | | 40000 | 24750 | 84175 | 79620 | 103506 | " | " | |
| 30 | 4 | 8 | 3 | | 14 | 68208 | | | | 27500 | 17812 | 58905 | 31350 | 40755 | 99660 | " | |

(suite)

| Décembre 91 | | | | | | | | | | | | | | | | | |
|---|---|---|---|---|---|---|---|---|---|---|---|---|---|---|---|---|---|
| D | t°1 | t°2 | t°3 | S | Δt° | P | p1 | F | A St, | Air 5 H, | Air 3 H, | Air Tot, *1,3 | Air Nuit | Air Nuit *1,3 | Total Air | RAF | Stock |
| 31 | 9 | 6 | 4 | | 13 | 63336 | | | | 22188 | 14624 | 47856 | 14400 | 18720 | 66576 | " | |

| Janvier 92 | | | | | | | | | | | | | | | | |
|---|---|---|---|---|---|---|---|---|---|---|---|---|---|---|---|---|
| D | t°1 | t°2 | t°3 | S | Δt° | P | p1 | F | Air 5 H, | Air 3 H, | Air Tot, *1,3 | Air Nuit | Air Nuit *1,3 | Total Air | RAF | Stock |
| | | | | | | | | | | | | | | | | 750000 |
| 1 | 4 | 8 | 2 | | 14 | 68208 | | | 27500 | 17624 | 58661 | 12000 | 16600 | 75212 | 0 | " |
| 2 | 2 | 6 | 0 | | 16 | 77952 | | | 21250 | 13875 | 45662 | 0 | 0 | 45622 | | 717710 |
| 3 | 0 | 4 | 6 | | 18 | 87696 | | | 14999 | 11624 | 34609 | 78375 | 101887 | 147061 | | 750000 |
| 4 | 6 | 6 | 8 | | 14 | 68208 | | | 25000 | 15375 | 52487 | 124650 | 162045 | 180000 | | " |
| 5 | 8 | 10 | 7 | | 11 | 53592 | | | 35624 | 21937 | 74829 | 130500 | 169500 | " | | " |
| 6 | 7 | 8 | 3 | | 13 | 63736 | | | 30312 | 17812 | 62561 | 31350 | 40755 | 103316 | | " |
| 7 | 3 | 6 | 2 | | 16 | 77952 | | | 22188 | 14249 | 47368 | 0 | 0 | 47368 | | 719416 |
| 8 | 2 | 7 | 5 | | 15 | 73080 | | | 23437 | 16500 | 51918 | 97870 | 129231 | 180000 | | 750000 |
| 9 | 5 | 8 | 2 | | 14 | 68208 | | | 28437 | 17624 | 59879 | 12000 | 16600 | 76479 | | " |
| 10 | 2 | 6 | -1 | | 16 | 77952 | | | 21250 | 13688 | 45419 | 0 | 0 | 45414 | | 717467 |
| 11 | -1 | 4 | 4 | | 18 | 87696 | | | 14061 | 11250 | 32904 | 0 | 0 | 32904 | | 662675 |
| 12 | 4 | 6 | 3 | | 15 | 73080 | | | 23125 | 14437 | 48831 | 0 | 0 | 48831 | | 638426 |
| 13 | 3 | 5 | 1 | | 16 | 77952 | | | 20000 | 12375 | 42087 | 0 | 0 | 42087 | | 602561 |
| 14 | 1 | 7 | 5 | | 16 | " | | | 22500 | 16500 | 50700 | 97870 | 127231 | 180000 | | 704609 |
| 15 | 5 | 8 | 2 | | 14 | 68208 | | | 28437 | 17624 | 59879 | 12000 | 16600 | " | | 750000 |
| 16 | 2 | 4 | 4 | | 17 | 87696 | | | 16875 | 11250 | 36562 | 0 | 0 | 36562 | | 698666 |
| 17 | 4 | 7 | 5 | | 15 | 73080 | | | 25312 | 16500 | 54356 | 97870 | 12731 | 180000 | | 750000 |
| 18 | 5 | 8 | 2 | | 14 | 68208 | | | 28437 | 17624 | 59879 | 12000 | 16600 | 76479 | | " " |
| 19 | 2 | 5 | 3 | | 17 | 82824 | | | 19063 | 12750 | 41357 | 0 | 0 | 39325 | | " |
| 20 | 3 | 3 | -4 | * | 17 | " | 15912 | 144611 | 15625 | 0 | 20312 | 0 | 0 | 20312 | | " |
| 21 | -4 | 0 | -7 | * | 22 | 107184 | 20592 | 138526 | 0 | 0 | 0 | 0 | 0 | 0 | | " |
| 22 | -7 | -2 | -6 | * | 24 | 116928 | 22462 | 136095<br>41629 | 0 | 0 | 0 | 0 | 0 | 0 | | " |
| 23 | -6 | 0 | -7 | * | 23 | 112056 | 21528 | 137309 | 0 | 0 | 0 | 0 | 0 | 0 | | " |
| 24 | -7 | 2 | -4 | * | 23 | " | " | " | 0 | 0 | 0 | 0 | 0 | 0 | | " |
| 25 | -4 | 3 | 1 | * | 21 | 102312 | 19656 | 139743 | 0 | 9000 | 11700 | 0 | 0 | 11700 | | " |
| 26 | 1 | 7 | 3 | | 16 | 77952 | | | 22500 | 16125 | 50212 | 14400 | 18720 | 68932 | | 740980 |
| 27 | 3 | 9 | -1 | | 14 | 68208 | | | 28750 | 18450 | 61360 | 0 | 0 | 61360 | | 734132 |
| 28 | -1 | 2 | -2 | * | 20 | 97440 | 18720 | 140960 | 0 | 0 | 0 | 0 | 0 | 0 | | 750000 |
| 29 | -2 | 7 | -3 | * | 23 | 112056 | 21528 | 137309 | 9688 | 0 | 12594 | 0 | 0 | 12594 | | " |
| 30 | -3 | 1 | -1 | * | 22 | 107184 | 20592 | 138526 | 0 | 0 | 0 | 0 | 0 | 0 | | " |

(suite)

| Janvier 92 | | | | | | | | | | | | | | | | |
|---|---|---|---|---|---|---|---|---|---|---|---|---|---|---|---|---|
| D | t°1 | t°2 | t°3 | S | Δt° | P | p1 | F | Air 5 H, | Air 3 H, | Air Tot, *1,3 | Air Nuit | Air Nuit *1,3 | Total Air | RAF | Stock |
| 31 | -1 | 0 | -4 | | 21 | 102312 | | | 0 | 0 | 0 | 0 | 0 | 0 | | 647688 |

**Fonctionnement des éléments**

A - Incorporation au procédé Chaper (voir schéma **figure 15** de la première étude).

Ces éléments fonctionnent uniquement avec le circuit de transfert et toute l'année; alors que le circuit de chauffage, uniquement d'Octobre à Mai. La figure 10 représente l'ensemble du circuit de transfert. La pompe P1 soutire la saumure froide de AC pour l'envoyer par les électrovannes V6 dans les solives ou les hourdis et V7 dans les éléments. Un thermomètre contacteur th.f est installé dans le bas de AC et dans l'élément th.g pour la température de l'air, ensuite th.i pour la saumure.

Nous utilisons les volets commandés électromécaniquement permettant toutes les manoeuvres nécessaires.

**Circuit de transfert complété :**

B - Fonctionnement

- Position repos. Quand il n'y a pas de chaleur à retirer ni du soleil, ni de l'air: th.d (qui est la température extérieure) est < th.f et th.i < th.f, P1 et le ventilateur sont à l'arrêt, V6 et V7 sont fermés (maximum d'isolation contre le vent et le froid).

- **Récupération de la chaleur solaire directe.** Lorsque le soleil apparaît, la chaleur captée par la tôle ondulée est transmise par la saumure (non en mouvement) à l'air contenu dans l'élément, th.g dépasse 25°, commande l'ouverture des volets (7) et (9), (6) et (8) sont fermés et la mise en route du ventilateur. L'air intérieur réchauffé alimente les solives ou les hourdis. Remarquons que V7 est fermé, V6 ouvert et P1 fonctionne pour transférer les calories captées par les solives dans AC.

- **Récupération de la chaleur solaire diffuse et celle de l'air.** Par manque de soleil, th.g devient inférieur à 25°, c'est la chaleur solaire diffuse et la chaleur de l'air qui sont utilisés.
  ***Chaleur solaire diffuse*** : Si th.d est < à th.f et th.i > à th.f, la chaleur est captée par la saumure, les 4 volets sont fermés, P1 fonctionne, V6 est fermé, V7 ouvert, le ventilateur à l'arrêt, les calories sont entraînées par la saumure dans AC. A cette chaleur s'ajoute inévitablement la chaleur de l'air extérieur en contact avec la tôle ondulée lorsque th.d devient supérieur à th.f.
  ***Chaleur de l'air extérieur*** *:*Lorsque th.d > th.f (la chaleur solaire diffuse négligeable - le plus souvent par temps de pluie) la chaleur est extraite de l'air extérieur par la saumure, les volets (6) et (8) s'ouvrent, (7) et (9) se ferment, P1 fonctionne, de même le ventilateur mais en sens inverse (air à contre-courant), V6 est fermé et V7 ouvert

- Correction de l'état hygrométrique. Lorsqu'un certain état hygrométrique est dépassé à l'intérieur de l'habitation, quelles que soient les conditions de captage de la chaleur solaire ou de l'air, un hygromètre contacteur ouvre les volets (7) et (9), ferme ou maintient fermé les volets (6) et (8), actionne le ventilateur, ouvre l'électrovanne V7 et la saumure froide déshydrate l'air jusque retour à la bonne hygrométrie.

- Refroidissement de l'élément. Principalement l'été et parfois durant les mois d'Octobre et Mai, lorsque la chaleur récupérée ne peut plus être stockée, (th.f = 25°) et que th.g dépasse 50°, les volets (6) et (8) s'ouvrent permettant à l'air de circuler, les autres volets sont fermés et si ce refroidissement par convection naturelle est insuffisant, th. g atteint une température trop élevée et actionne en plus le ventilateur.

- **Refroidissement de l'habitation l'été.** Durant la période estivale, le circuit de chauffage est à l'arrêt, seul le circuit de transfert et la commande des volets des convecteurs fonctionnent. Lorsque la nuit, th.d (la température extérieure) tombe en dessous de 20°, les volets (7) et (8) s'ouvrent, le ventilateur tourne en sens inverse. L'air introduit refroidit l'habitation et en même temps l'eau se trouvant dans les convecteurs (ces derniers cherchant automatiquement à rétablir l'équilibre ; c'est la raison pour laquelle la commande des volets des convecteurs reste en service). A l'action de l'air, il faut ajouter l'action de la saumure: en même temps V7 s'ouvre, P1 fonctionne, la saumure refroidie dans l'élément se retrouve dans AC. Le jour AC peut à son tour refroidir l'habitat par les solives tant que th.f est inférieur à 20°.

- **Récupération de l'air de ventilation.** Dans l'habitation pilote, selon la première étude, le volume d'air rejeté à l'extérieur à la température de 20°est de 120 $m^3$/heure. La perte de chaleur est importante. Les éléments permettent de la récupérer. Cette récupération peut être effectuée d'une manière continue ou périodique dans quelques éléments situés aux points critiques : cuisine, buanderie, etc..., puisque le débit dans un élément atteint 252 $m^3$/heure. Pour cela, les volets (7) et (8) se ferment, le ventilateur tourne en sens inverse, l'air entre par le volet (9) et sort par le (6), P1 est actionné, V7 s'ouvre, V6 reste fermé. Les calories se retrouvent dans l'accumulateur.

- **Habitation non occupée :**

  - ***L'hiver*** : Seul le circuit de transfert fonctionne avec le soleil et l'air, les calories captées et stockées dans AC alimentent les solives permettant par la suite de réchauffer l'air ambiant.
  - ***L'été:*** L'habitat sera refroidi comme déjà expliqué.

  Concernant l'état hygrométrique, on ne peut plus faire appel à la saumure froide puisque la PAC est à l'arrêt, on doit recourir à la solution déliquescente pour capter l'eau en excès dans l'air. C'est l'hygromètre précédemment utilisé qui enclenche ce circuit, les volets (7) et (9) sont ouverts, le ventilateur fonctionne ainsi qu'une petite pompe pour alimenter la membrane poreuse.

  Dans notre pilote, on utilisera probablement un élément pour cette fonction.

Durant la période de chauffe, comme expliqué dans l'étude Chaper, on ajoute à l'énergie des éléments, celle captée par les fenêtres le jour, et la nuit celle retirée par l'échangeur et la PAC, mais seulement après avoir vidé AC de ses calories, car la température dans AC sera pratiquement toujours plus élevée que la température de l'air la nuit.

**Revendications**

**1.** Eléments préfabriqués, pour murs extérieurs et toitures, représenté à la **figure 1** comprenant 2 caissons, un ventilateur, 4 volets, une tôle doublement ondulée en dents de scie (verticalement et horizontalement) afin de capter les rayons solaires directs dans toutes les positions de l'élément.

**2.** De par les positions des volets, les fonctions suivantes :

a/ - Selon la **figure 6**, isoler l'habitation contre le froid, la chaleur et atténuer leurs effets en éliminant les turbulences causées par le vent.
b/ - Selon la figure 3, capter le rayonnement solaire direct par l'air de l'habitation.
c/ - Capter le maximum du rayonnement solaire diffus selon la positon des volets de la figure 6 et la chaleur se trouvant même à basse température dans l'air extérieur selon la figure 4 avec la saumure arrivant à une température négative et circulant dans des canaux de section triangulaire obtenus par la superposition de la tôle ondulée avec une tôle plane.
d/ - La combinaison de l'extraction par air ou saumure selon la **figure 3** pour assécher l'air au degré hygrométrique idéal.
e/ - Selon la **figure 5,** refroidir l'habitat l'été.

**3.** Présenter en toiture une grande résistance à la chute des grêlons.

**4.** Faciliter la construction en dissociant les parties de l'élément. En assemblant d'abord tous les cadres pour constituer l'ossature (murs extérieurs et toits), fixer la tôlerie y compris les volets (6) et (8) et l'habitation est à l'abri des intempéries une fois portes et fenêtres posées pour le reste de la construction.

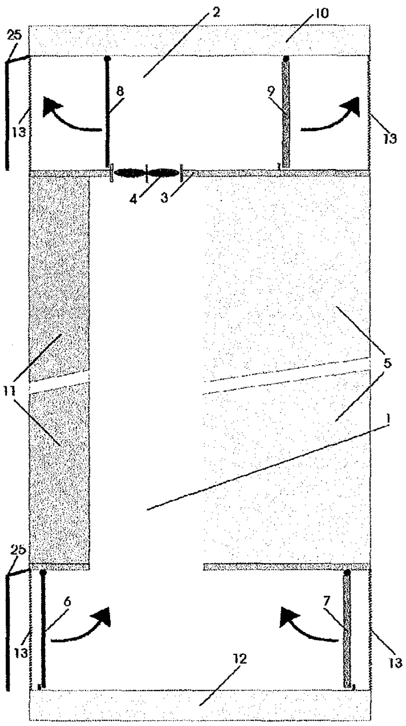


Fig. 1

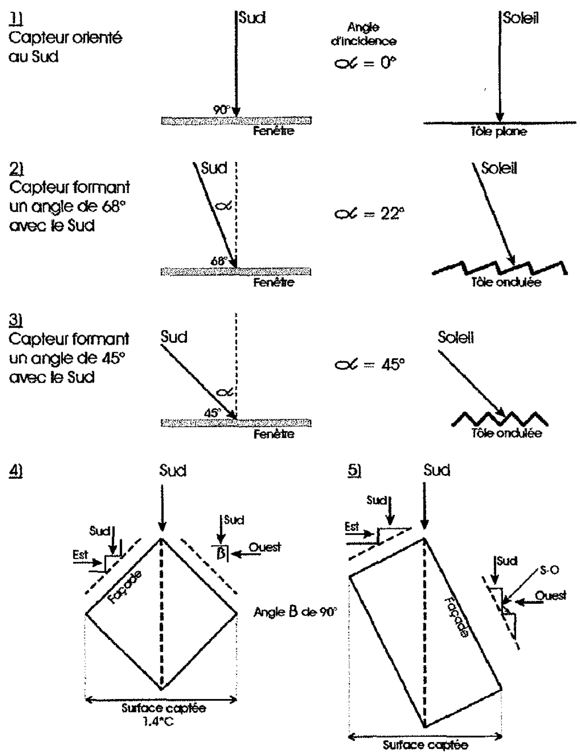


Fig 2

Fig. 3

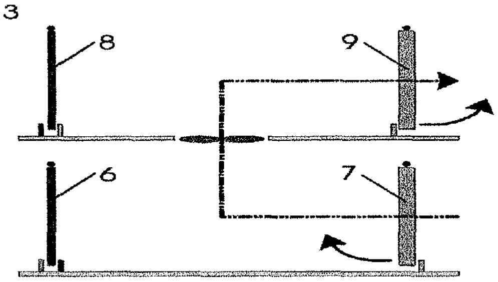


Fig. 4

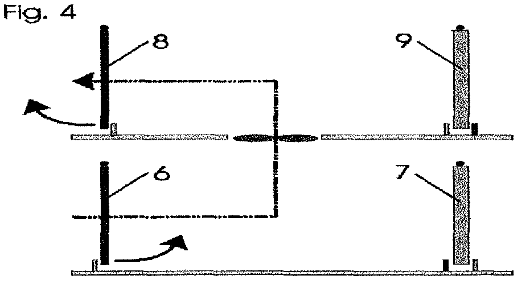


Fig. 5

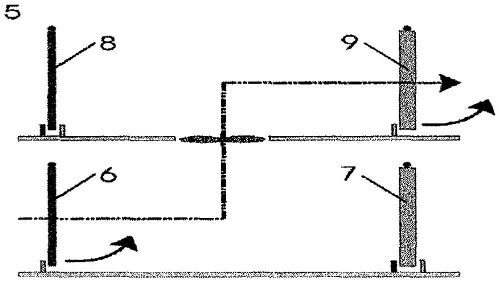


Fig. 6

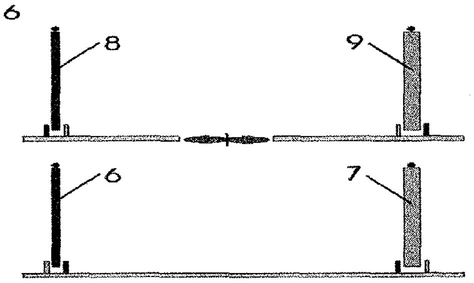


Fig. 7

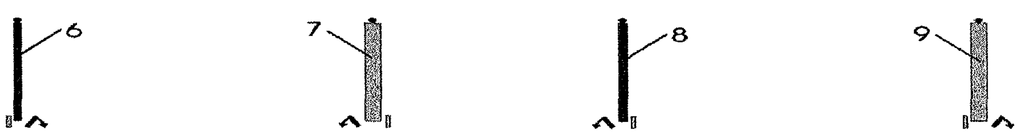

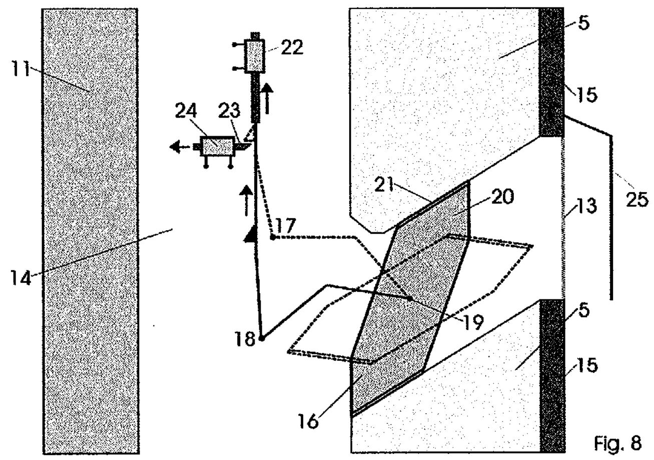


Fig. 8

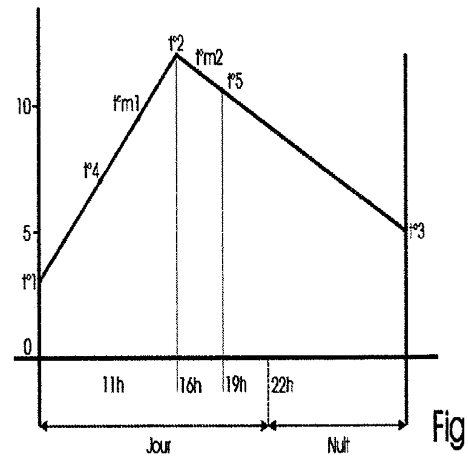


Fig 9

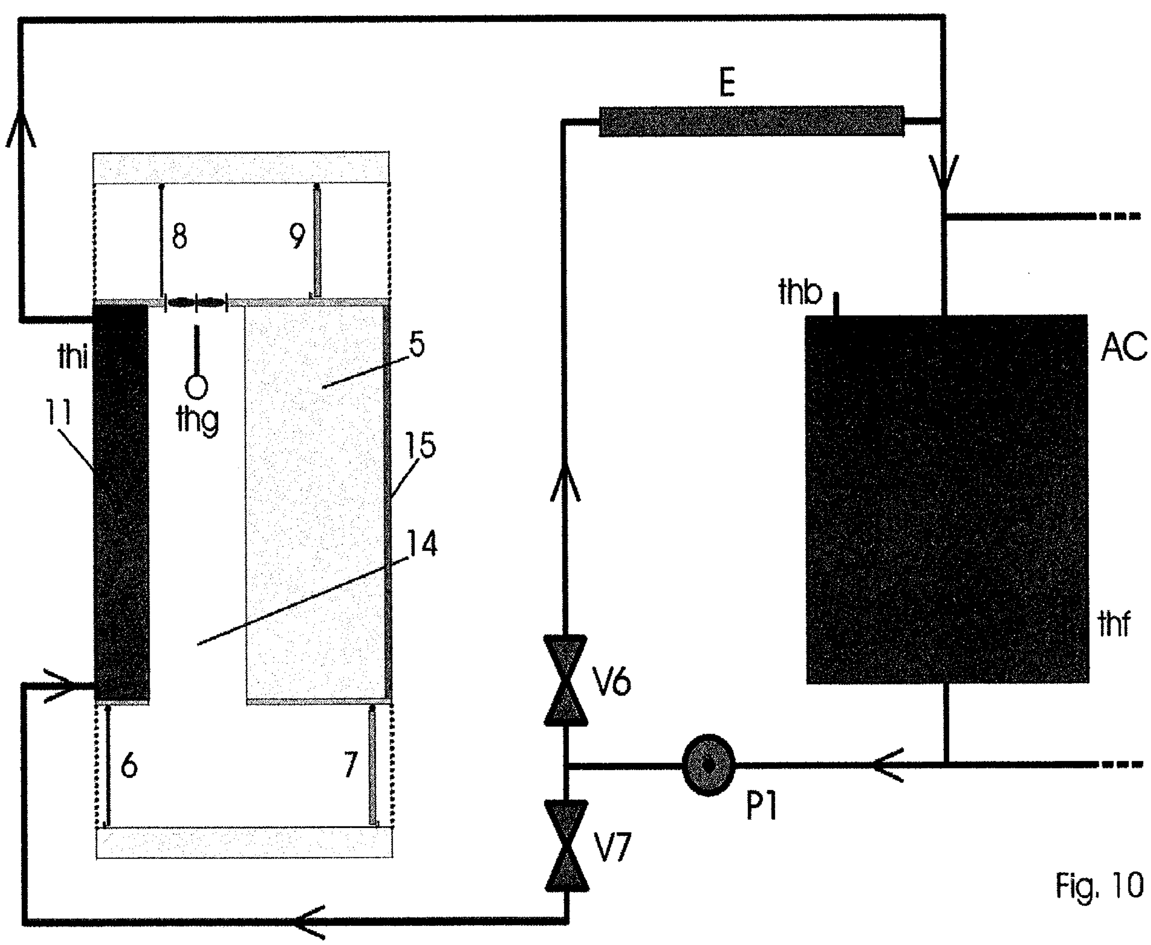


Fig. 10